# EUROPÄISCHE PATENTSCHRIFT

(11) **EP 4 137 241 B1**
(45) Veröffentlichungstag und Bekanntmachung des Hinweises auf die Patenterteilung: **11.09.2024**
(21) Anmeldenummer: 22185364.1
(22) Anmeldetag: 18.07.2022
(51) Int. Cl.: B21B 31/00

(54) **WALZGERÜST MIT EINER MEDIENZUFUHR**
ROLL STAND WITH A SUPPLY OF MEDIA
CAGE DE LAMINOIR AVEC ALIMENTATION EN AGENT

(30) Priorität: 17.08.2021 DE 102021208989
(43) Veröffentlichungstag der Anmeldung: 22.02.2023
(73) Patentinhaber: SMS group GmbH, 41069 Mönchengladbach (DE)
(72) Erfinder: Filk, Edgar, 57250 Netphen (DE)
(74) Vertreter: Hemmerich & Kollegen

(56) Entgegenhaltungen:
- WO-A2-03/090948
- JP-A- H10 314 815
- JP-U- S53 126 934

## Beschreibung

Die Erfindung betrifft ein Walzgerüst mit axial verschiebbaren Arbeitswalzen, umfassend eine mit einer axialen Arbeitswalzen-Verschiebung mitführbare Medienkupplung.

Bei Walzgerüsten werden in vielen Fällen automatische Medienkupplungen verwendet, um Medien wie beispielsweise Walzöl oder Walzemulsion oder Mittel zur Lagerschmierung an die Walzen und/oder die Lagerung der Walzen zuzuführen. Bei Walzgerüsten mit axial verschiebbaren Arbeitswalzen werden für die Öl- Luft Zufuhr in der Regel pneumatische Zylinder mit hohl gebohrten Kolbenstangen verwendet, an deren vorderem Ende eine Verschlusskupplung vorgesehen ist, die beispielsweise mit einem Kupplungsgegenstück in einem Arbeitswalzen Einbaustück zusammenwirkt. Die Kolbenstange drückt über den gesamten Verschiebehub der Arbeitswalze die Kupplung auf das in dem Arbeitswalzen Einbaustück vorgesehene Kupplungsgegenstück. Die Zufuhr des Mediums erfolgt über einen Schlauch, der auf das von der Arbeitswalze abliegenden Ende der Kolbenstange geschraubt wird.

Eine solche Medienkupplung ist beispielsweise aus der EP 1 497 048 B1 bekannt. Derartige Medienkupplungen sind üblicherweise auf der Antriebsseite des Walzgerüsts vorgesehen, auf der verhältnismäßig wenig Einbauraum zur Verfügung steht. Eine Medienkupplung wie sie beispielsweise in der EP 1 497 048 B1 beschrieben ist, benötigt verhältnismäßig viel Bauraum, was unter Umständen zu einer zumindest teilweisen Überdeckung mit anderen Baugruppen des Walzgerüsts, wie beispielsweise einer Spindelhalterung der Arbeitswalzen, führen kann.

Eine Vorrichtung zum Kuppeln und Entkuppeln der Medienzuleitungen an den in Walzenständern geführten Einbaustücken von Stützwalzen ist beispielsweise in der EP 0 947 255 A2 beschrieben. Diese Veröffentlichung betrifft eine Vorrichtung zum Kuppeln und Entkoppeln von Medienzuleitungen an Einbaustücken von Walzen, die in Walzenständern geführt sind, wobei die Kupplungselemente der Medienzuleitungen den Medienanschlüssen in den Einbaustücken zugewandt und gemeinsam in einem Träger angeordnet sind. Dieser Träger ist parallel zur Anstellbewegungsrichtung in einem Führungsrahmen geführt. Der Führungsrahmen ist in mit dem Walzenständer verbundenen Führungen in Walzenachsrichtung gegen das Einbaustück und von diesem weg verschiebbar. Der Träger ist so ausgebildet, dass er der Anstellbewegung der Arbeitswalzen folgen kann. Der Oberbegriff von Anspruch 1 basiert auf der EP 0 947 255 A2.

Weiterer Stand der Technik ist aus den Veröffentlichungen WO 03/090948 A2, JP H10 314815 A und JP S35 126934 U bekannt.

Der Erfindung liegt die Aufgabe zugrunde, eine automatische Medienkupplung der eingangs genannten Art bereitzustellen, die einer axialen Arbeitswalzen-Verschiebung folgen kann und die ein An- und Abkuppeln von Medienzuführungen auf möglichst kleinem Bauraum ermöglicht.

Die Aufgabe wird gelöst mit den Merkmalen des Anspruchs 1. Vorteilhafte Ausgestaltungen der Erfindung ergeben sich aus den Unteransprüchen.

Ein Gesichtspunkt der vorliegenden Erfindung betrifft eine Medienzufuhr an einem Walzgerüst mit axial verschiebbaren Arbeitswalzen, umfassend eine mit einer axialen Arbeitswalzen-Verschiebung mitführbare Medienkupplung, wobei die Medienkupplung wenigstens ein erstes Kupplungsstück für wenigstens eine Zuleitung umfasst, welches zu einem zweiten Kupplungsstück an einem Arbeitswalzeneinbaustück komplementär ausgebildet ist und mit diesem in- und außer Eingriff bringbar ist, wobei die Medienkupplung wenigstens eine Kupplungsaufnahme wenigstens für das erste Kupplungsstück aufweist und die Kupplungsaufnahme entsprechend dem Verschiebeweg der Arbeitswalzen axial verstellbar ist, wobei sich die Medienzufuhr insbesondere dadurch auszeichnet, dass für die Verstellung der Kupplungsaufnahme wenigstens ein Drehantrieb vorgesehen ist, der eine translatorische Bewegung der Kupplungsaufnahme bewirkt.

Unter einer axialen Verschiebung im Sinne der vorliegenden Erfindung ist eine Verschiebung in der Rotationsachse und/oder parallel zur Rotationsachse der betreffenden Arbeitswalze zu verstehen. Unter einem Kupplungsstück im Sinne der vorliegenden Erfindung ist ein Verbindungselement einer vorzugsweise zweiteiligen Kupplung mit einem Steckende und einem Muffenende zu verstehen. Eine Kupplungsaufnahme im Sinne der vorliegenden Erfindung ist eine Halterung bzw. Befestigung für ein Kupplungsstück, die im einfachsten Fall als Montageplatte mit entsprechenden Aufnahmebohrungen ausgebildet sein kann.

Insbesondere dadurch, dass für die Verstellung der Kupplungsaufnahme wenigstens ein Drehantrieb vorgesehen ist, der eine translatorische Bewegung der Kupplungsaufnahme bewirkt, ist eine aktive Verschiebung der Kupplungsaufnahme synchron mit einer axialen Arbeitswalzen-Verschiebung auf kleinstem Bauraum realisierbar. Der Verschiebeweg kann beispielsweise etwa 200 mm betragen.

Bei einer bevorzugten Variante der Medienzufuhr gemäß der Erfindung ist vorgesehen, dass die Kupplungsaufnahme als Halteplatte ausgebildet ist, die auf Linearführungen verschiebbar gelagert ist. Die Linearführungen sind vorzugsweise an einem Bauteil des Walzgerüsts befestigt, das in Bezug auf die Arbeitswalzen-Verschiebung stationär angeordnet ist.

Als Linearführungen können wenigstens zwei, vorzugsweise drei Führungsprofile vorgesehen sein, auf welchen die Kupplungsplatte gleitend verschiebbar gelagert ist.

Die Führungsprofile können beispielsweise als zylindrische Säulen ausgebildet sein. Die Kupplungsplatte kann mittels entsprechender Gleitlager auf den Säulen verschiebbar geführt sein. Eine solche Führung lässt sich verhältnismäßig einfach mit selbstschmierenden Gleitlagern bewerkstelligen.

Bevorzugt sind die Linearführungen an einem Widerlager für Verstellzylinder eines Walzen Biege- und/oder Balanciersystems des Walzgerüsts befestigt.

Die Medienkupplung gemäß der Erfindung kann beispielsweise in dem Bauraum zwischen dem Biegesystem des Walzgerüsts und einer Spindelhalterung vorgesehen sein. Insbesondere die Spindelhalterungen, die dazu dienen, die Spindelköpfe der Arbeitswalzen temporär beim Einbau und/oder beim Ausbau der Arbeitswalzen festzulegen, benötigen verhältnismäßig viel Bauraum, weil die Spindelhaltungen jeweils Spannfutter für die Spindelköpfe der Arbeitswalzen umfassen, die quer zur Längsachse der Arbeitswalzen einen Verschiebeweg benötigen.

Bei einer zweckmäßigen und vorteilhaften Ausgestaltung der Medienzufuhr gemäß der Erfindung umfasst der Drehantrieb wenigstens ein Getriebe, welches die translatorische Verstellung der Kupplungsaufnahme bewirkt. Der Drehantrieb kann elektrisch, hydraulisch oder pneumatisch sein. Ein elektrischer Drehantrieb kann beispielsweise als Schrittmotor ausgebildet sein.

Das Getriebe gemäß der Erfindung kann beispielsweise eine Kulissenführung umfassen, mit der eine Drehbewegung des Drehantriebs in eine Linearbewegung der Kupplungsaufnahme umsetzbar ist. Eine solche Kulissenführung lässt sich auf sehr kleinem Bauraum realisieren.

Zweckmäßigerweise sind auf der Kupplungsaufnahme eine Vielzahl von ersten Kupplungsstücken zum Anschluss einer Vielzahl von Zuleitungen, beispielsweise für Öl, Luft, Walzemulsion oder dergleichen vorgesehen.

Zweckmäßigerweise ist die Kupplungsaufnahme als Halte- und Montageplatte für mehrere erste Kupplungsstücke ausgebildet.

Weiterhin ist es vorteilhaft, wenn wenigstens eine Verstellweg-Begrenzung für den Verstellweg der Kupplungsaufnahme vorgesehen ist.

Hierzu kann beispielsweise vorgesehen sein, dass die Führungsprofile eine Kopfplatte als Anschlag für die Kupplungsaufnahme aufweisen.

Gegenstand der Erfindung ist auch ein Walzgerüst mit einer Medienzufuhr mit einem oder mehreren der vorstehend beschriebenen Merkmale.

Die Erfindung wird nachstehend anhand eines Ausführungsbeispiels unter Bezugnahme auf die beigefügten Zeichnungen erläutert.

Es zeigen:
- Figur 1: eine perspektivische Teilansicht der Antriebsseite eines Walzgerüsts gemäß der Erfindung, in der aus Vereinfachungsgründen die Medienkupplung nicht dargestellt ist,
- Figur 2: einen Ausschnitt einer der Figur 1 entsprechenden Ansicht, die die Medienkupplung darstellt, wobei in dieser Ansicht aus Vereinfachungsgründen die in Figur 1 dargestellten Spindelhalterungen weggelassen sind,
- Figur 3: eine schematische Darstellung der an einem Biegeblock des Walzgerüsts befestigten Medienkupplung aus einem Blickwinkel von etwa 45° bezogen auf die Längsachse der Arbeitswalzen und
- Figur 4: eine der Figur 3 entsprechende Ansicht um 90° gedreht.

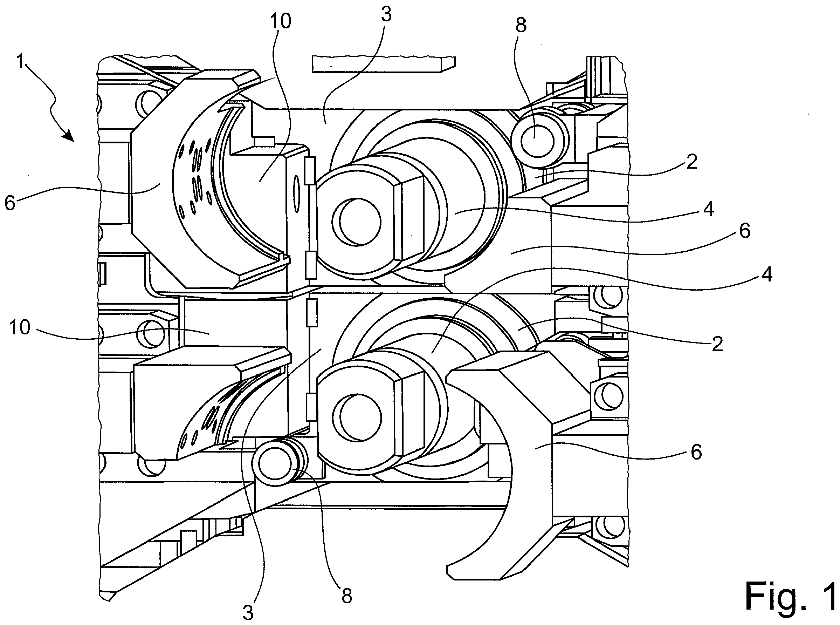

Die in Figur 1 gezeigte perspektivische Ansicht ist eine Teilansicht eines Walzgerüsts 1 mit einer 4-high Konfiguration umfassend zwei Arbeitswalzen 2 sowie zugehörige Stützwalzen, die in bekannter Art und Weise in einem Walzenständer jeweils in Einbaustücken gelagert sind. Dargestellt sind die in Arbeitswalzeneinbaustücken 3 gelagerten Arbeitswalzen 2 auf der Antriebsseite des Walzgerüsts 1. Weiterhin sind in Figur 1 die Walzenzapfen 4 der Arbeitswalzen 2 dargestellt, auf denen die Spindelköpfe sitzen, die beim Einbau und beim Ausbau der Arbeitswalzen 2 aus dem Walzgerüst 1 mittels Spindelhalterungen 5 temporär festlegbar sind. Die Spindelhalterungen 5 umfassen jeweils zwei Klemmbacken 6, die ein Spannfutter bilden und jeweils im Sinne einer Öffnungs- und Schließbewegung relativ zueinander verstellbar sind. Die Klemmbacken 6 dienen zur temporären Festlegung der Spindelköpfe 4 der Arbeitswalzen beim Einbau oder Ausbau der Arbeitswalzen 2.

In den Arbeitswalzeneinbaustücken 3 ist jeweils das Muffenende einer Steckverbindung als Kupplungsgegenstück bzw. als zweites Kupplungsstück 7 vorgesehen, welches komplementär zu einem ersten Kupplungsstück 8 der Medienkupplung 9 gemäß der Erfindung ausgebildet ist.

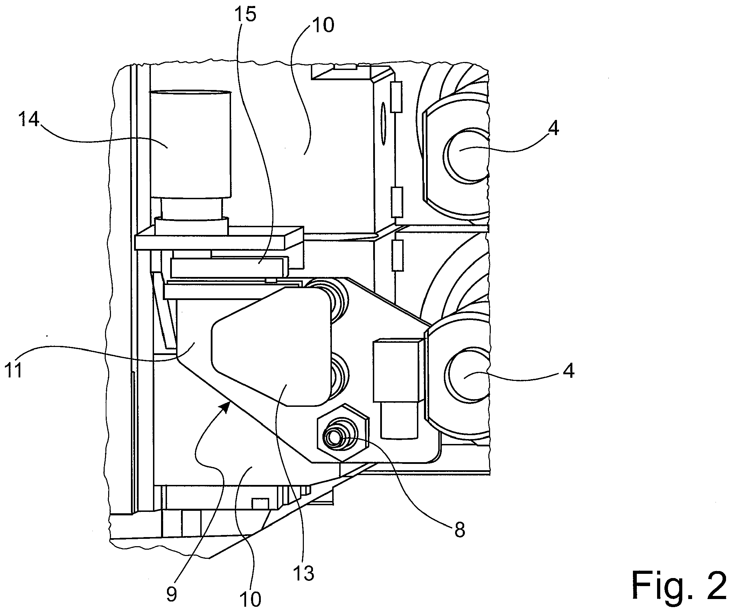

Die Medienkupplung ist in den Ansichten der Figuren 2 bis 4 dargestellt. Es wird im Folgenden zunächst auf die in Figur 2 dargestellte Ansicht verwiesen, die die Einbausituation der Medienkupplung 9 in dem Walzgerüst 1 gemäß der Erfindung zeigt. Die Medienkupplung 9 ist ortsfest an einen Biegeblock 10 eines Biege- und/oder Balanciersystems des Walzgerüsts 1 befestigt. Diese umfasst eine Kupplungsaufnahme, die als Halteplatte 11 ausgebildet ist und erste Kupplungsstücke 8 aufnimmt, die beispielsweise in Befestigungsbohrungen der Halteplatte 11 eingesetzt sind.

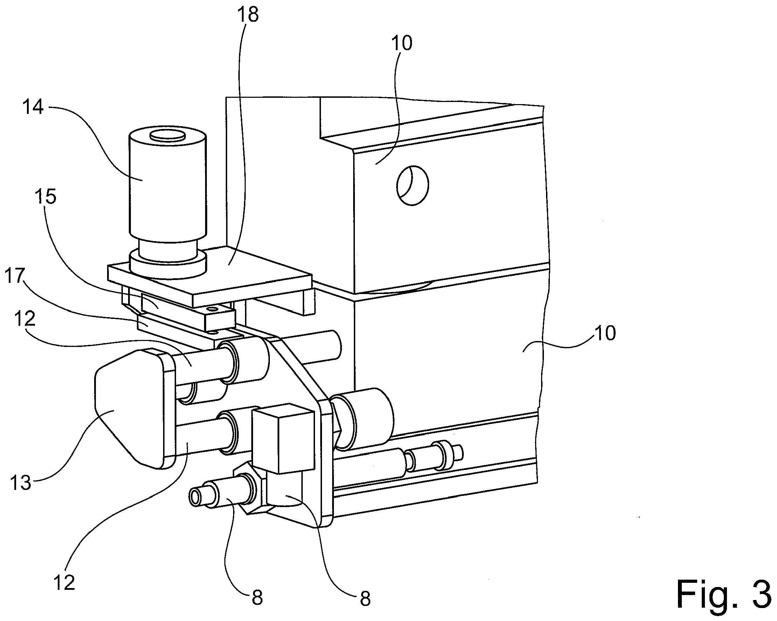

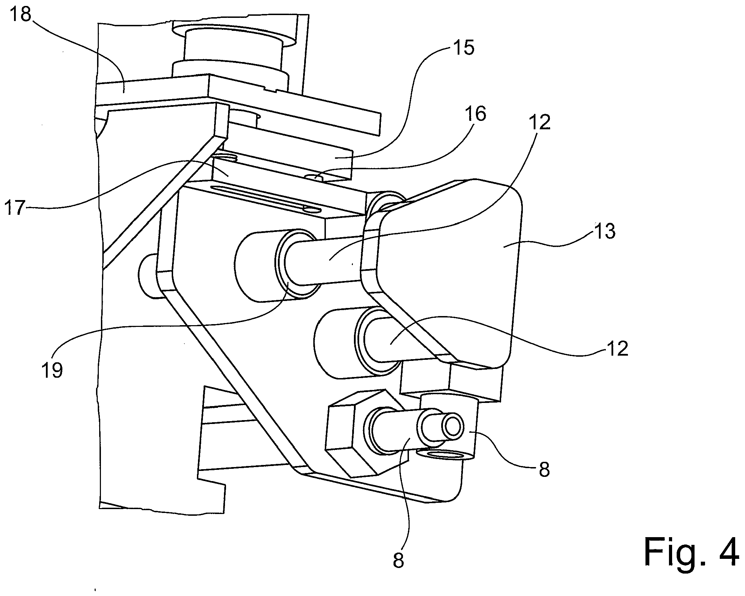

An die ersten Kupplungsstückstücke 8 werden Zuleitungen für Luft, Öl , Öl-Luft oder dergleichen angeschlossen. Die Zuleitungen sind der Einfachheit halber in den Figuren nicht dargestellt. Wie dies insbesondere aus den Figuren 3 und 4 ersichtlich ist, ist die Halteplatte 11 verschiebbar auf drei zylindrischen Säulen 12 gelagert, die fest mit dem Biegeblock 10 verschraubt sind. Die Halteplatte 11 ist zwischen dem Biegeblock 10 und einer Kopfplatte 13 verstellbar, und zwar mittels eines Drehantriebs 14, der mit einem Schwenkhebel 15 und einem an diesem befestigten Zapfen 16 in eine Kulissenführung 17 der Halteplatte 11 eingreift.

Der Drehantrieb 14, der sowohl als elektrischer Antrieb als auch als pneumatischer oder hydraulischer Antrieb ausgebildet sein kann, ist auf einer Konsole 18 befestigt, die wiederum fest an dem Biegeblock 10 angeordnet ist. Die Halteplatte 11 umfasst weiterhin Gleitlagerbuchsen 19, die von den Säulen 12 durchsetzt sind und eine reibungsarme translatorische Bewegung der Halteplatte mit den darauf vorgesehenen ersten Kupplungsstücken 8 gewährleistet.

Wie dies insbesondere aus der Ansicht in Figur 3 ersichtlich ist, ist die Halteplatte 11 in Bezug auf die Drehachse der Arbeitswalzen 2 axial verstellbar und kann so einer Arbeitswalzen-Verschiebung (in die Zeichnungsebene hinein und aus der Zeichnungsebene heraus) folgen. Der Drehantrieb 14 wird entsprechend der axialen Verschiebung der Arbeitswalzen 2 angesteuert, und zwar derart, dass die Medienkupplung 9 synchron mitgeführt wird und die Kupplung wie eine Feder zur Sicherung einer Mindest-Kupplungskraft der Steckverbindung bzw. Verschlusskupplung wirkt.

Die ersten Kupplungsstücke 8 sind jeweils mit einem Steckende versehen, das mit einem Muffenende des korrespondierenden zweiten Kupplungsstücks 7 zusammenwirkt und in diesem abgedichtet ist. In den Figuren ist nur das Steckende eines ersten Kupplungsstücks 8 dargestellt, an einem ebenfalls dargestellten weiteren ersten Kupplungsstück 8 kann beispielsweise ein Steckende in Form eines Winkelstücks vorgesehen sein.

### Bezugszeichenliste

- 1: Walzgerüst
- 2: Arbeitswalzen
- 3: Arbeitswalzeneinbaustücke
- 4: Walzenzapfen
- 5: Spindelhalterung
- 6: Klemmbacken
- 7: zweites Kupplungsstück
- 8: erstes Kupplungsstück
- 9: Medienkupplung
- 10: Biegeblock
- 11: Halteplatte
- 12: Säulen
- 13: Kopfplatte
- 14: Drehantrieb
- 15: Schwenkhebel
- 16: Zapfen
- 17: Kulissenführung
- 18: Konsole
- 19: Gleitlagerbuchse

## Patentansprüche

1. Walzgerüst (1) mit axial verschiebbaren Arbeitswalzen (2) mit einer Medienzufuhr, umfassend eine mit einer axialen Arbeitswalzenverschiebung mitführbare Medienkupplung (9) , wobei die Medienkupplung (9) wenigstens ein erstes Kupplungsstück (8) für wenigstens eine Zuleitung umfasst, welches zu einem zweiten Kupplungsstück (7) an einem Arbeitswalzeneinbaustück (3) komplementär ausgebildet ist und mit diesem in- und außer Eingriff bringbar ist, wobei die Medienkupplung (9) wenigstens eine Kupplungsaufnahme wenigstens für das erste Kupplungsstück (8) aufweist und die Kupplungsaufnahme entsprechend dem Verschiebeweg der Arbeitswalzen (2) axial verstellbar ist, **dadurch gekennzeichnet, dass** für die Verstellung der Kupplungsaufnahme wenigstens ein Drehantrieb (14) vorgesehen ist, der eine translatorische Bewegung der Kupplungsaufnahme bewirkt.

2. Walzgerüst nach Anspruch 1, **dadurch gekennzeichnet, dass** die Kupplungsaufnahme als Halteplatte (11) ausgebildet ist, die auf Linearführungen verschiebbar gelagert ist.

3. Walzgerüst nach Anspruch 2, **dadurch gekennzeichnet, dass** als Linearführungen wenigstens zwei, vorzugsweise drei Führungsprofile vorgesehen sind, auf welchen die Kupplungsaufnahme gleitend verschiebbar gelagert ist.

4. Walzgerüst nach einem der Ansprüche 1 bis 3, **dadurch gekennzeichnet, dass** die Führungsprofile als zylindrische Säulen (12) ausgebildet sind.

5. Walzgerüst nach einem der Ansprüche 1 bis 4, **dadurch gekennzeichnet dass** die Linearführungen an einem Widerlager für Verstellzylinder eines Walzen Biege- und/oder Balanciersystems des Walzgerüsts (1) befestigt sind.

6. Walzgerüst nach einem der Ansprüche 1 bis 5, **dadurch gekennzeichnet dass** der Drehantrieb (14) wenigstens ein Getriebe umfasst, über welches die translatorische Verstellung der Kupplungsaufnahme bewirkt wird.

7. Walzgerüst nach Anspruch 6, **dadurch gekennzeichnet, dass** das Getriebe wenigstens eine Kulissenführung umfasst, mit der eine Drehbewegung des Drehantriebs (14) in eine Linearbewegung der Kupplungsaufnahme umsetzbar ist.

8. Walzgerüst nach einem der Ansprüche 1 bis 7, **dadurch gekennzeichnet dass** die Kupplungsaufnahme eine Vielzahl von ersten Kupplungsstücken (8) zum Anschluss einer Vielzahl von Zuleitungen aufweist.

9. Walzgerüst nach einem der Ansprüche 1 bis 8, **dadurch gekennzeichnet dass** die Kupplungsaufnahme als Halte- und Montageplatte für eine Vielzahl von ersten Kupplungsstücken (8) ausgebildet ist.

10. Walzgerüst nach einem der Ansprüche 1 bis 9, **dadurch gekennzeichnet dass** wenigstens eine Verstellweg - Begrenzung für den Verstellweg der Kupplungsaufnahme vorgesehen ist.

## Claims

1. Roll stand (1) with axially displaceable work rolls (2) with a media feed, comprising a media coupling (9) able to accompany an axial work roll displacement, wherein the media coupling (9) comprises at least one first coupling member (8), which is complementary in configuration to a second coupling member (7) at a work roll chock (3) and can be brought into and out of engagement therewith, for at least one feed line, wherein the media coupling (9) comprises at least one coupling mount at least for the first coupling member (8) and the coupling mount is axially adjustable in correspondence with the displacement travel of the work rolls (2), **characterised in that** at least one rotary drive (14), which produces a translational movement of the coupling mount, for the adjustment of the coupling mount is provided.

2. Roll stand according to claim 1, **characterised in that** the coupling mount is constructed as a holding plate (11), which is mounted on linear guides to be displaceable.

3. Roll stand according to claim 2, **characterised in that** at least two, preferably three, guide profile members on which the coupling mount is mounted to be slidingly displaceable are provided as linear guides.

4. Roll stand according to any one of claims 1 to 3, **characterised in that** the guide profile members are constructed as cylindrical columns (12).

5. Roll stand according to any one of claims 1 to 4, **characterised in that** the linear guides are secured to a counter-bearing for adjusting cylinders of a roll bending and/or balancing system of the roll stand (1).

6. Roll stand according to any one of claims 1 to 5, **characterised in that** the rotary drive (14) comprises at least one transmission by way of which the translational adjustment of the coupling mount is produced.

7. Roll stand according to claim 6, **characterised in that** the transmission comprises at least one slide guide by which a rotational movement of the rotary drive (14) is convertible into a linear movement of the coupling mount.

8. Roll stand according to any one of claims 1 to 7, **characterised in that** the coupling mount comprises a plurality of first coupling members (8) for connection of a plurality of feed lines.

9. Roll stand according to any one of claims 1 to 8, **characterised in that** the coupling mount is constructed as a holding and mounting plate for a plurality of first coupling members (8).

10. Roll stand according to any one of claims 1 to 9, **characterised in that** at least one adjustment travel limitation for the adjustment travel of the coupling mount is provided.

## Revendications

1. Cage de laminoir (1) avec des cylindres de travail axialement déplaçables (2) avec une alimentation en média, comprenant un accouplement de média (9) pouvant être entraîné par un déplacement axial des cylindres de travail, l'accouplement de média (9) comprenant au moins une première pièce d'accouplement (8) pour au moins une conduite d'alimentation, qui est formée de manière complémentaire à une deuxième pièce d'accouplement (7) sur une pièce d'insertion de cylindre de travail (3) et peut être mise en prise et hors prise avec celle-ci, l'accouplement de média (9) ayant au moins un logement d'accouplement au moins pour la première pièce d'accouplement (8) et le logement d'accouplement peut être ajusté axialement en fonction de la course de déplacement des cylindres de travail (2), **caractérisée en ce qu'**au moins un entraînement rotatif (14) est prévu pour l'ajustement du logement d'accouplement, qui provoque un mouvement de translation du logement d'accouplement.

2. Cage de laminoir selon la revendication 1, **caractérisée en ce que** le logement d'accouplement est conçu comme une plaque de retenue (11) qui est montée de manière à pouvoir se déplacer sur des guides linéaires.

3. Cage de laminoir selon la revendication 2, **caractérisée en ce qu'**au moins deux, de préférence trois profils de guidage sont prévus comme guides linéaires, sur lesquels le logement d'accouplement est monté de manière à pouvoir glisser.

4. Cage de laminoir selon l'une quelconque des revendications 1 à 3, **caractérisée en ce que** les profils de guidage sont conçus comme des colonnes cylindriques (12).

5. Cage de laminoir selon l'une quelconque des revendications 1 à 4, **caractérisée en ce que** les guides linéaires sont fixés à un appui pour des vérins de réglage d'un système de flexion et/ou d'équilibrage des cylindres de la cage de laminoir (1).

6. Cage de laminoir selon l'une quelconque des revendications 1 à 5, **caractérisée en ce que** l'entraînement rotatif (14) comprend au moins une transmission, par l'intermédiaire de laquelle le réglage de translation du logement d'accouplement est effectué.

7. Cage de laminoir selon la revendication 6, **caractérisée en ce que** la transmission comprend au moins un guide de coulisse, avec lequel un mouvement de rotation de l'entraînement rotatif (14) peut être converti en un mouvement linéaire du logement d'accouplement.

8. Cage de laminoir selon l'une quelconque des revendications 1 à 7, **caractérisée en ce que** le logement d'accouplement comporte une pluralité de premières pièces d'accouplement (8) pour le raccordement d'une pluralité de conduites d'alimentation.

9. Cage de laminoir selon l'une quelconque des revendications 1 à 8, **caractérisée en ce que** le logement d'accouplement est conçu comme une plaque de retenue et de montage pour une pluralité de premières pièces d'accouplement (8).

10. Cage de laminoir selon l'une quelconque des revendications 1 à 9, **caractérisée en ce qu'**au moins une limitation de course de réglage est prévue pour la course de réglage du logement d'accouplement.
